# EUROPEAN PATENT APPLICATION

(11) **EP 4 768 741 A1**
(43) Date of publication of application: **01.07.2026**
(21) Application number: 25158881.0
(22) Date of filing: 19.02.2025
(51) Int. Cl.: F16C 13/00, F16C 13/04, F16C 19/50, F16C 19/54, B01D 53/78, B01D 3/30

(54) **ROLLER ASSEMBLY FOR ROTATING PACKED BED SYSTEM**

(30) Priority: 31.12.2024 IN 202441105162
(71) Applicant: Hindustan Petroleum Corporation Limited, Bengaluru 560067 (IN)
(72) Inventor: TOMPALA, Annaji Rajiv Kumar, 560067 Bengaluru (IN); KUNIYIL, Arun, 560067 Bengaluru (IN); KUMARAVELAN, Madan Kumar, 560067 Bengaluru (IN); SHANKAR, Jainendrakumar, 560067 Bengaluru (IN); DURGA, Kakara Vijaya, 560067 Bengaluru (IN)
(74) Representative: TRBL Intellectual Property

(57) **Abstract**

The present disclosure relates to a Rotating packed bed (RPB) (101) wherein the rotor assembly (106) is supported on a roller assembly (100) for improved mechanical integrity and low vibrations and a method (200) thereof. The roller assembly (100) includes at least three rollers (102) distributes a load that is disposed in a rotating shaft (103) of the rotor assembly (106). The at least three rollers (102) are adapted to configure in a pre-determined configuration i.e. in triangular pitch. The outer layer (104) is disposed an exterior surface (104-1) of each of the at least three rollers (102) respectively. Further, the rotating shaft (103) is positioned at the center of the first (102-1), the second (102-2), and the third (102-3) rollers, such that the rotating shaft (103) comes in contact with the outer layer (104) of the three rollers (102-1), (102-2), (102-3) thereby provide support to RPB (101).

## Description

### FIELD OF THE INVENTION

The embodiments of the present disclosure generally relate to the rotating packed bed (hereinafter "RPB") technology. More particularly, the present disclosure relates to a roller assembly to enhance the mechanical support for the rotor assembly in RPB used in chemical processing units, which addresses the mechanical limitations observed in conventional RPB units.

### BACKGROUND OF THE INVENTION

Background description includes information that may be useful in understanding the present disclosure. It is not an admission that any of the information provided herein is prior art or relevant to the presently claimed disclosure, or that any publication specifically or implicitly referenced is prior art.

Rotating packed bed (RPB) technology has gained prominence in gas-liquid separation and distillation processes due to its high mass transfer efficiency and reduced equipment size. Said technology utilizes a rotor assembly which is a rotating porous structure through which liquid and gas streams are passed to facilitate mass transfer / reactions on the surface, improving process outcomes significantly. Traditional RPB units employ various mechanical configurations to support the rotor assembly, which is integral to the system's operation.

A prior art reference "CN 113058413" titled "Multi-rotor sleeve type super-gravity rotating packed bed for treating waste gas of power plant" discloses a multi-rotor sleeve type supergravity rotating packed bed which is mainly used in the field of waste gas treatment and provides a multi-rotor sleeve type rotating packed bed for treating waste gas of a power plant. Said multi-rotor sleeve-type rotating packed bed includes a shell, the interior of the shell is divided into an upper layer and a lower layer, a gas inlet is formed in one side of the bottom of the upper-layer shell, and a one-way valve is arranged in a gas inlet pipeline. Further, a water outlet is formed in the opposite side of the bottom of the upper-layer shell and connected with a water-collecting barrel. Four sleeve-type packed beds are further arranged in the upper-layer shell. The catalytic packing is arranged in a packing supporting frame, a water inlet pipeline is arranged in the hollow portion of each sleeve-type packed bed, and meanwhile the upper portion of each sleeve-type packed bed is connected with a rotor device, the rotation directions of the rotor devices are consistent. A water inlet pipeline is arranged in a lower-layer shell and is connected to a water storage barrel, and an air outlet pipeline is arranged at the center of the shell. In the prior art, the sleeve-type packed beds are arranged in the upper-layer shell. Another prior art reference "CN 103785192 A", titled "High-flux multi-spindle multi-rotor parallel-connection type supergravity rotating bed device" discloses a high-flux multi-spindle multi-rotor parallel-connection type supergravity rotating bed device that includes a rotating bed shell, an electric motor, an auxiliary gear, a main gear, rotating shafts, rotors, a static disc, a liquid guide pipe and a check ring. The static disc divides the rotating bed shell into an upper cavity body and a lower cavity body, the rotating bed shell is internally provided with the parallel-connected rotating shafts, a dynamic seal used for preventing gas from being short-circuited is arranged between the top end of each rotor and the static disc; the main gear is fixed on an electric motor rotating shaft positioned on the electric motor; the auxiliary gear positioned beside the main gear meshes with the main gear, and an auxiliary gear shaft is fixed on the auxiliary gear; the electric motor rotating shaft and the auxiliary gear shaft drive the parallel-connected rotating shafts and the parallel connected rotors positioned on the rotating shafts to rotate through belts. The liquid guide pipe is provided with liquid spray holes, the liquid guide pipe is fixed in the check ring, and the inlet end of the liquid guide pipe is connected with a liquid inlet.

In conventional RPB designs, the rotor assembly is supported using a cantilever-type arrangement, where the rotor assembly is supported only at the drive end (DE), leaving the non-drive end unsupported. Such designs of rotor assembly could potentially lead to mechanical instability and reliability concerns under heavier process loads or during continuous operation. Further, conventional rotor assembly support systems, wherein, a shaft passes through the central axis of the rotor and supported at either end by dedicated support systems, cannot be directly applied to the RPB unit due to the arrangement of liquid distributor and gas outlet assembly in the central axis of the rotor.

To address the aforementioned challenges and limitations in the prior arts, there is a need for a mechanical redesign of the support system for RPB.

Thus, a support mechanism that accommodates the structural and operational requirements of the RPB is required to ensure stability and reliability during extended periods of operation. There is constant need for developing a more stable support arrangement for the RPB system.

Thus, there exists a dire need in the art, to provide a support in the form of roller assembly to the rotor assembly of RPB during mass transfer operations or chemical operations and a method thereof.

### BRIEF DESCRIPTION OF THE INVENTION

Some of the objects of the present disclosure, which at least one embodiment herein satisfies are as listed herein below.

It is a general object of the present disclosure that provides a roller assembly to provide support for rotor assembly of a rotating packed bed (RPB) and a method thereof.

It is another object of the present disclosure to provide a roller assembly that minimizes wear on the rotating shaft by using rollers coated with chemical-resistant materials.

It is another object of the present disclosure to enhance the durability of the roller assembly by employing self-lubricating or sealed bearings that reduce maintenance.

It is another object of the present disclosure to provide stability to the rotating shaft by fixing its position within the assembly.

It is another object of the present disclosure to provide a sturdy support to the rotor assembly of RPB without compromising on various functions of RPB during operation is of interest in the chemical processing unit.

Various objects, features, aspects, and advantages of the inventive subject matter will become more apparent from the following detailed description of preferred embodiments, along with the accompanying drawing figures in which like numerals represent like components.

Within the scope of this application, it is expressly envisaged that the various aspects, embodiments, examples, and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

The present disclosure provides a roller assembly to support the rotor assembly of a rotating packed bed (RPB) in a chemical processing unit and a method thereof. The roller assembly includes at least three or more rollers positioned in a triangular pitch to evenly distribute the load from the rotor. The shaft, is positioned at the center of the three rollers and comes in contact with the exterior surface of each roller, which is coated with a chemical-resistant outer layer.

According to an aspect, the roller assembly includes three rollers that are oriented to distribute the load placed on the rotating shaft. Each roller has an exterior layer made of a chemical-resistant material. The rotating shaft of the rotor assembly is positioned at the center of the three rollers and rotates the RPB to produce centrifugal force. The rotating shaft is hollow and allows routing of liquid distributor assembly through its annular conduit. Each roller's purpose is to keep in place the rotating shaft against the upward thrust exerted due to the centrifugal motion of RPB. In another aspect, the at least three rollers are held in place through individual roller shafts which are fixed on the casing of RPB. When the RPB rotates, the rotor assembly and the rotating shaft imparts angular velocity to the all the three rollers with which it is in contact. The rollers rotate around its individual roller shafts without causing any lateral displacement. Hence, the rollers remain in place and also fixes the rotating shaft in its place thereby providing a very rigid support to the rotor assembly of the RPB.

In yet another aspect, the roller assembly includes internal bearings connected between the roller and the individual roller shaft. The bearings may be self-lubricating or sealed to ensure smooth and low-maintenance operation.

### DESCRIPTION OF THE DRAWINGS

The accompanying drawings, which are incorporated herein, and constitute a part of this disclosure, illustrate exemplary embodiments of the disclosed methods and systems in which like reference numerals refer to the same parts throughout the different drawings. Components in the drawings are not necessarily to scale, emphasis instead being placed upon clearly illustrating the principles of the present disclosure. Some drawings may indicate the components using block diagrams and may not represent the internal circuitry of each component. It will be appreciated by those skilled in the art that the disclosure of such drawings includes the disclosure of electrical components, electronic components or circuitry commonly used to implement such components.
FIG. 1 illustrates an exemplary system block diagram of a roller assembly to provide support, in accordance with an exemplary embodiment of the present disclosure.
FIG. 2 illustrates an exemplary flow diagram that describes the step-wise illustration of a method of providing support to the rotor assembly of the RPB, in accordance with an embodiment of the present disclosure.
FIG. 3 (a-b) illustrates an exemplary representation of a three-pin roller assembly (a) and setup of a roller assembly (b), in accordance with an embodiment of the present disclosure.
FIG. 4 illustrates an exemplary overview of a rotating packed bed (RPB) (101) with components, in accordance with an embodiment of the present disclosure.

Other objects, advantages, and novel features of the disclosure will become apparent from the following more detailed description of the present embodiment when taken in conjunction with the accompanying drawings.

### DETAILED DESCRIPTION OF THE INVENTION

Various example embodiments will now be described more fully with reference to the accompanying drawings in which only some example embodiments are shown. Specific structural and functional details disclosed herein are merely representative for purposes of describing example embodiments. The present disclosure, however, may be embodied in many alternate forms and should not be construed as limited to only the example embodiments set forth herein.

Accordingly, while example embodiments of the disclosure are capable of various modifications and alternative forms, embodiments thereof are shown by way of example in the drawings and will herein be described in detail. It should be understood, however, that there is no intent to limit example embodiments of the present disclosure to the particular forms disclosed. On the contrary, example embodiments are to cover all modifications, equivalents, and alternatives falling within the scope of the disclosure. Like numbers refer to like elements throughout the description of the figures.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

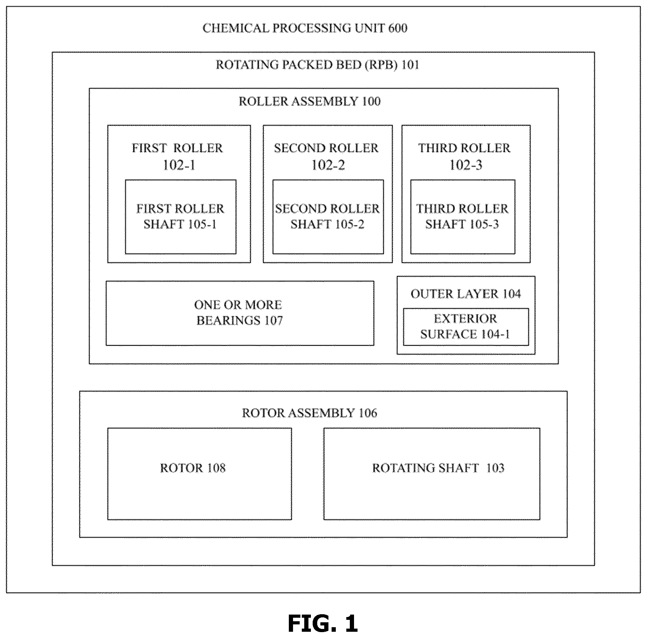

Hereinafter, exemplary embodiments of the present disclosure will be described with reference to the accompanying drawings FIGs. 1-4.

The present disclosure relates a roller assembly (100) to provide support to a rotating packed bed (hereinafter "RPB") that is embedded within a chemical processing unit (600) and a method (200) thereof.

FIG. 1 illustrates an exemplary system block diagram (150) of a roller assembly (100) to provide support to a RPB (101), in accordance with an exemplary embodiment of the present disclosure.

In an embodiment of the present disclosure, the roller assembly (100) to provide support to the rotor assembly (106) of RPB (101) is disclosed. The roller assembly (100) is adapted to distribute the load imposed by a rotating shaft (103) of the rotor assembly (106) while ensuring smooth operation and enhanced durability. The configuration of the roller assembly (100) is characterized by at least three rollers (102-1, 102-2, and 102-3 collectively termed as 102 hereinafter) , oriented to provide optimal load distribution. The rollers (102-1, 102-2, 102-3) are arranged in a triangular pitch and include an outer layer (104) made of specific chemical-resistant material to endure the demanding operational conditions in a chemical processing environment.

In an exemplary implementation of the embodiment, the roller assembly (100) includes a first roller (102-1), a second roller (102-2), and a third roller (102-3) positioned in a triangular configuration to effectively support the load distributed from the rotating shaft (103) of the roller assembly (106). The rotating shaft (103) of the rotor assembly (106) is centrally positioned in relation to the rollers (102-1, 102-2, and 102-3), ensuring that the outer surface of each roller comes in direct contact with the rotating shaft (103). The triangular arrangement of the rollers (102-1, 102-2, 102-3) enhances the stability and load distribution for the rotation of the RPB (101). At least three or more pin rollers are held in place having three roller shafts (105-1, 105-2, 105-3 collectively termed as 105 hereinafter) placed therein. The individual three rotor shafts are fixed on the casing of RPB. When the RPB rotates, the rotor sleeve imparts angular velocity to the all the three roller pins with which it is in contact. The roller pins rotate around its roller shafts (105) without causing any lateral displacement. Hence, the rollers remain in place and also fixes the rotating shaft (103) of the rotor assembly (106) in its place thereby providing a very rigid support to the RPB.

In the exemplary implementation of the embodiment, the function of bottom rollers (102-2), 102-3) take the load of the rotor assembly (106) and fix the rotor in place against the downward thrust exerted due to centrifugal motion of the RPB (101). The purpose of the top roller (102-1) is to keep in place the rotating shaft (103) against the upward thrust exerted due to the centrifugal motion of RPB.

In the exemplary implementation of the embodiment, an outer layer (104) is provided on the exterior surface (104-1) of each roller (102-1, 102-2, 102-3). The outer layer (104) is made of materials selected for their chemical resistance properties, such as polytetrafluoroethylene (PTFE), perfluoroelastomer, fluoroelastomer, ethylene propylene diene monomer (EPDM), silicone rubber, ultra-high molecular weight polyethylene (UHMWPE), perfluoroalkoxy alkane (PFA), polyurethane, neoprene (polychloroprene), hastelloy coatings, ethylene tetrafluoroethylene (ETFE), fluorinated ethylene propylene (FEP), or polyether ether ketone (PEEK). The materials are selected based on their ability to withstand various corrosive or high-temperature environments typically encountered in chemical processing units (600).In the exemplary implementation of the embodiment, the roller assembly (100) further includes one or more bearings (107) configured to provide smooth rotational movement between the rollers and their respective individual roller shaft (105-1,105-2,105-3) respectively. The bearings (107) (hereinafter the terms 'internal bearings', 'one or more bearings' and 'maintenance-free bearings' are used interchangeably) may be self-lubricating or sealed, depending on the operational requirements. The feature ensures smooth rotation of the RPB (101) while reducing wear and tear on the rotating shaft (103) and rollers (102-1, 102-2, 102-3). In the exemplary implementation of the first embodiment, one or more bearings (107) are internal bearing (107).

In the exemplary implementation of the first embodiment, the chemical processing unit (600) that houses the RPB (101) is an integrated unit designed to perform one or more chemical reactions or processes. The rotating packed bed (RPB) (101) functions to carry out mass transfer operations, chemical processes in the unit, and the roller assembly (100) is adapted to provide the necessary support for its rotation. The RPB (101), when rotated, generates a centrifugal force that facilitates high gas-liquid interactions causing mixing, reaction, or separation of chemical substances within the processing unit (600).

In the exemplary implementation of the first embodiment, the chemical reactions may include but not limited to, neutralization reaction, oxidation-reduction (redox) reactions, polymerization, or hydrolysis.

In the exemplary implementation of the first embodiment, the chemical processes may include but not limited to, distillation, catalytic cracking, absorption, filtration, or evaporation. The chemical processing unit (600) may be adapted to include systems for conducting the aforementioned and other chemical reactions and processes, making it versatile for applications in industries like petrochemicals, pharmaceuticals, food processing, and environmental engineering.

In the exemplary implementation of the first embodiment, the three rollers (102-1, 102-2, 102-3) are arranged in triangular pitch configuration. The triangular pitch refers to the configuration wherein the three rollers (102-1, 102-2, 102-3) are arranged at the vertices of an equilateral triangle, ensuring that the angles between adjacent rollers are equal (for example: 60 degrees).

In the exemplary implementation of the first embodiment, the load refers to the weight or force exerted by the rotating shaft (103) of the roller assembly (106) and any attached components, such as the rotating packed bed (RPB) (101), onto the supporting rollers, i.e., the first roller (102-1), second roller (102-2), and third roller (102-3). The load may include the combined gravitational forces, centrifugal forces due to the rotation, and any additional operational forces generated during the chemical processes occurring within the chemical processing unit (600).

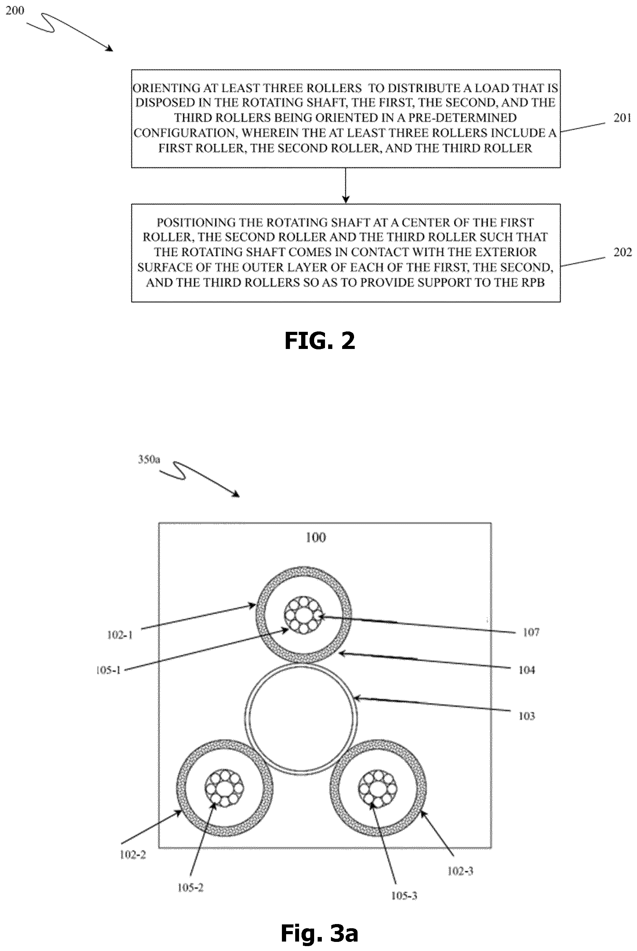

FIG. 2 illustrates an exemplary flow diagram that describes the step-wise illustration of a method (200) of providing support to the rotor assembly of the RPB the RPB (101), in accordance with an embodiment of the present disclosure.

In another embodiment of the present disclosure, the method (200) for providing support to a RPB (101) is disclosed. The rotating packed bed (RPB) (101), embedded within a chemical processing unit (600), involves several steps to ensure load distribution and operational stability of the RPB (101). The method (300) includes the following steps:

At block 201 the method (200) begins with the orientation (201) of a first roller (102-1), a second roller (102-2), and a third roller (102-3) in a manner that ensures distribution of the load applied by the rotating shaft (103). The three rollers are arranged in a pre-determined configuration i.e. a triangular pitch, where the placement of the rollers creates a stable structure that balances the load from the rotating shaft (103) of the rotor assembly (106) to provide enhanced support to the RPB (101).

The method (200) further includes the outer layer (104) which is applied to the exterior surface (104-1) of the rollers (102-1, 102-2, 102-3), and the rotating shaft (103) of the rotor assembly (106) is positioned at the center of the rollers (102-1, 102-2, 102-3), ensures that the rotating shaft (103) of the rotor assembly (106) comes into contact with the outer surface (104-1) of each roller.

At block 202 the rotating shaft (103) is positioned at the center of the first roller (102-1), the second roller (102-2), and the third roller (102-3). This positioning allows the rotating shaft (103) of the rotor assembly (106) to come into contact with the exterior surface (104-1) of the outer layer (104) of all three rollers, providing uniform support to the rotating packed bed (RPB) (101). The disclosed configuration helps in maintaining the alignment of the rotating shaft (103) of the rotor assembly (106) while minimizing friction during operation, thus supporting the overall functionality of the RPB (101) within the chemical processing unit (600).

In the exemplary implementation of the embodiment, the second roller (102-2) and the third roller (102-3) are connected to secure the base of the rotating shaft (103) of rotor assembly (106). Additionally, the first roller (102-1) is connected to secure the top of the rotating shaft (103) of rotor assembly (106). The configuration provides stability to both the base and top portions of the rotating shaft (103) of rotor assembly (106), ensures effective load-bearing support and reduces the potential for misalignment during operation.

In an exemplary implementation of the embodiment, each roller (102-1, 102-2, 102-3) includes a set of internal bearings internally, which provide smooth rotational movement between the rollers and their respective individual roller shaft (105-1,105-2,105-3) respectively. The internal bearings (107) reduce mechanical wear and ensure that the rotation of the rollers remains fluid and efficient, further aiding in the stable operation of the rotating packed bed (RPB) (101).

In the exemplary implementation of the embodiment, the outer layer (104) applied to the exterior surface (104-1) of the rollers is composed of a chemical-resistant material.

In the exemplary implementation of the embodiment, the material used for the outer layer (104) is selected from a group of compounds known for their resistance to harsh chemicals. These materials include, but are not limited to, polytetrafluoroethylene (PTFE), perfluoroelastomer, fluoroelastomer, ethylene propylene diene monomer (EPDM), silicone rubber, ultra-high molecular weight polyethylene (UHMWPE), perfluoroalkoxy alkane (PFA), polyurethane, neoprene (polychloroprene), hastelloy coatings, ethylene tetrafluoroethylene (ETFE), fluorinated ethylene propylene (FEP), or polyether ether ketone (PEEK). Each of these materials provides high resistance to chemical degradation, thereby ensuring the longevity and reliability of the roller assembly (100) in the chemical processing environment.

In the exemplary implementation of the embodiment, the bearings (107) connect the rollers to individual roller shafts (105-1, 105-2, 105-3) respectively and configured to provide smooth rotational movement between the rollers and their respective individual roller shaft (105-1,105-2,105-3) respectively. The bearings (107) are self-lubricating or sealed.

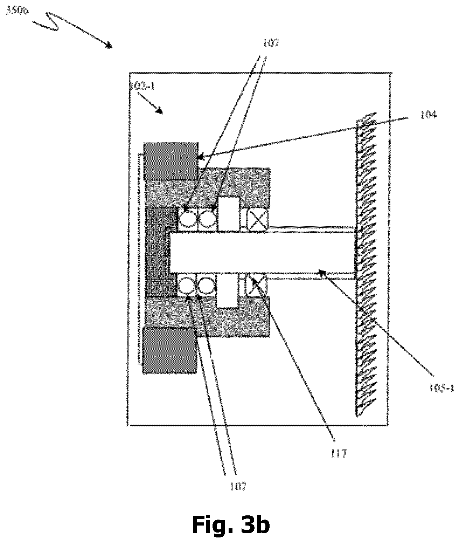

FIGs. 3 (a-b) illustrates an exemplary representation (350) of a three-pin roller assembly (a) and setup of a roller assembly (100) (b), in accordance with an embodiment of the present disclosure.

In yet another embodiment of the present disclosure, the structural changes in a three-pin roller assembly along with contact shaft that enable the flow of liquid into the rotor (108) and flow of gas outside of rotor (108) and provide support and locking mechanism for the RPB (101) assembly to have simply supported mechanical design.

In an exemplary representation of the embodiment, the three-pin roller assembly which includes three rollers forming triangular pitch and having process-compatible soft material (materials may include but not limited to PTFE, Kalrez, Viton, etc.) layer on the external surface (tightly packing the shaft (103) and restrict vibration without causing mechanical scores/damage on the surface), inherently sealed self-lubricating roller balls (which doesn't need regular maintenance), allowing a hollow shaft through the central region which rests on two of the second (102-2) and third rollers (102-3) and locked in position by the first roller (102-2) so as to configure in a triangular pitch. The shaft (103) allows the transportation of liquid into the unit and gas outside of unit through a Gas-Liq distributor.

In another embodiment of the present disclosure, the FIG. 3a illustrates a detailed configuration of a three-pin roller assembly to provide support to a rotating packed bed (RPB) (101), wherein the rotor assembly (106) includes a hollow rotating shaft (103) and a set of three rollers (102-1, 102-2, 102-3) positioned in a triangular arrangement around the rotating shaft (103). Each roller includes several distinct features for efficient operation and load distribution.

In an exemplary implementation of the embodiment, the three rollers (102-1, 102-2, 102-3) are each equipped with an outer layer (104) made from a soft material that is disposed on the exterior surface (104-1, 104-2, 104-3.... collectively termed as 104 hereinafter) The purpose of the outer layer (104) is to minimize wear and tear, reduce friction, and provide protection against harsh environmental factors, such as chemical exposure, ensuring the longevity and smooth functioning of the rollers.

In an exemplary implementation of the embodiment, the soft material may be a chemically resistant substance, selected from a group including but not limited to polytetrafluoroethylene (PTFE), perfluoroelastomer, fluoroelastomer, and other high-performance materials, as mentioned earlier.

In an exemplary implementation of the embodiment, each roller (102-1, 102-2, 102-3) includes a set of internal bearings (107) internally, which provide smooth rotational movement between the rollers and their respective individual roller shaft (105-1,105-2,105-3) respectively. The internal bearings (107) reduce mechanical wear and ensure that the rotation of the rollers remains fluid and efficient, further aiding in the stable operation of the rotating packed bed (RPB) (101).

Further, the rotating shaft (103) is positioned centrally within the three-roller assembly, directly contacting the outer layer (104) of each of the rollers. The rotating shaft (103) reduces its weight without compromising structural integrity. In an exemplary implementation of the embodiment, the triangular configuration of the rollers (102-1, 102-2, 102-3) ensures balanced load distribution. The first roller (102-1) is positioned at the top of the rotating shaft (103), while the second roller (102-2) and the third roller (102-3) are positioned at the base. The arrangement ensures that the rotating shaft (103) is securely held at multiple points, preventing any lateral or vertical displacement during operation.

It may be appreciated by the person skilled in the art that, the configuration of the rollers (102) may be implemented in any polygonal shape depending on the number of the rollers involved in the assembly including but not limited to quadrilateral, pentagon, hexagon, heptagon, octagon, nonagon, decagon, circle or ellipse. The configuration of rollers may be implemented with two or one roller based on the support required for the main rotating shaft.

In an exemplary implementation of the embodiment, the roller assembly (100) highlights a system of load distribution, with the hollow rotating shaft (103) interacting with the rollers through their soft material outer layers (104). The configuration ensures that the rotating packed bed (RPB) (101) may operate within a chemical processing unit (600), with minimal wear and maximum stability.

In an exemplary implementation of the embodiment, the triangular configuration of the rollers (102-1, 102-2, 102-3) ensures balanced load distribution. The first roller (102-1) is positioned at the top of the rotating shaft (103), while the second roller (102-2) and the third roller (102-3) are positioned at the base. The arrangement ensures that the rotating shaft (103) is securely held at multiple points, preventing any lateral or vertical displacement during operation.

In an exemplary implementation of the embodiment, the roller assembly highlights an efficient system of load distribution, with the rotating shaft (103) interacting with the rollers through their soft material outer layers (104).

FIG. 3b illustrates a detailed configuration of a roller assembly setup designed to provide support to a rotating shaft (103) in a chemical processing unit (600). The roller assembly includes components such as soft material, internal maintenance-free bearings, and seals, each serving specific purposes in ensuring smooth rotation between the rollers and their respective individual roller shaft (105-1,105-2,105-3) respectively and support for the rotating packed bed (RPB) (101). In the roller assembly setup, each roller (102-1, 102-2, 102-3) is provided with an external layer of soft material (104) disposed on its surface.

In these embodiments, each roller is equipped with maintenance-free bearings (107), which allow the roller to rotate smoothly around its axis. The internal bearings (107) are included to minimize mechanical friction, reduce wear over time, and eliminate the need for regular lubrication or maintenance, making them highly efficient for long-term use in industrial applications. The bearings (107) ensure that the roller assembly (100) operates with minimal resistance, thus facilitating the efficient rotation between rollers (102-1, 102-2, 102-3) and individual roller shafts (105-1, 105-2, 105-3) respectively.

In these embodiments, the assembly further includes seals, positioned adjacent to the bearings. The seals are intended to prevent contaminants, such as dust, moisture, or chemical substances, from entering the internal bearing components, thereby extending the lifespan of the roller assembly. The inclusion of seals is particularly important in environments where the rotating packed bed (RPB) (101) is exposed to corrosive chemicals or abrasive materials, as it ensures that the bearings (107) remain clean and functional.

In these embodiments, the rotating shaft (103) is securely supported by the rollers (102-1, 102-2, 102-3). The shaft's movement is stabilized by the soft material that contacts the roller surfaces. The arrangement ensures efficient load distribution, preventing misalignment of the shaft (103) during operation. The hollow nature of the shaft (103), as mentioned previously, reduces the overall weight of the rotating assembly, while the soft material layer (104) ensures smooth operation, enhancing the durability of the assembly.

In these embodiments, the roller assembly setup provides a robust support system for the rotating shaft (103), ensures low vibrations during operation and operates efficiently within the rotating packed bed (RPB) (101). The combined use of soft material (104), maintenance-free bearings, and seals ensures that the assembly is well-suited for applications requiring low maintenance, high chemical resistance, and reliable performance in industrial processing units.

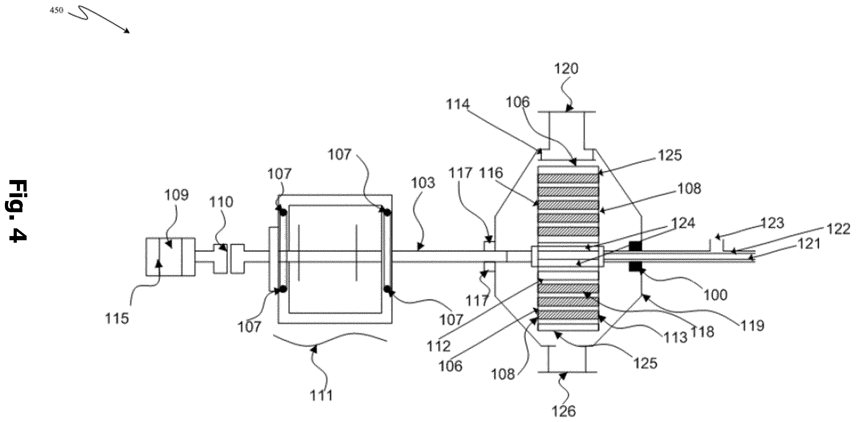

FIG. 4 illustrates an exemplary overview (450) of a rotating packed bed (RPB) system with components, in accordance with an embodiment of the present disclosure.

Referring to FIG. 4, the RPB (101) comprises an RPB unit and a motor (115). The RPB (101) facilitates mass transfer or reaction between a liquid and a gas. The RPB (101) includes a rotating shaft (103) and a rotor (108). The rotating shaft (103) may be a low-weight metallic hollow drive shaft. The rotor (108) includes one or more sets of concentric rings of packing elements (118), stacked together.

The rotor assembly (106) as illustrated in FIG, 4, the rotor assembly (106) a top metallic plate (113), a base metallic plate (112), a set of metallic rings concentrically interposed between the top metallic plate (113) and the base metallic plate (112), wherein, each ring comprises of the packing elements. The top metallic plate (113) and the base metallic plate (112) are connected to the rotating shaft (103) to rotate the rotor (108).

Further, the RPB (101) includes the motor (115) is connected to the rotating shaft (103) to rotate the rotating shaft (103). The RPB (101) further includes a liquid inlet (123) and gas outlet (121) attached to the rotor (108). The RPB (101) further includes a bearing housing (111) mounted onto the rotating shaft (103) to counter at least one of a radial load and an axial load affected by the rotor (108).

In an exemplary implementation of the present disclosure, a liquid inlet (123) and gas outlet (121) assembly may be provided for facilitating the inflow of liquid into the rotor (108) and the exit of gas from the rotor (108). The liquid distributor assembly may comprise a central hollow pipe, hereinafter referred to as the gas outlet (121), which allows the gas to exit from the rotor (108) due to a pressure differential. Surrounding the gas outlet (121) is a liquid inlet (123) for facilitating the inflow of the liquid. The liquid enters the rotor (108) through the annular space between the gas outlet (121) and the liquid inlet (123). The liquid inlet (123) and gas outlet (121) assembly further comprises one or more liquid distributor assemblies (122) connected to the liquid inlet (123) for distributing the liquid inside the rotor (108). Each of the liquid distributor assemblies (122) comprises one or more nozzles through which the liquid may be distributed inside the rotor (108).

One end of the shaft (103) may be connected to the motor (115) through one or more removable couplings (110). The removable couplings (110) may also be referred to as the couplers (110). The motor (115) facilitates the rotation of the shaft (103) and thereby the rotation of the rotor (108). In an example, a variable frequency drive (VFD) (109) may be provided for controlling the speed of the motor (115). The shaft may have a plurality of sequential steps on the outer surface for facilitating the mounting of a bearing housing (111) onto the shaft (103). The bearing housing (111) comprises one or more ball bearings housed in the bearing housing (111) for countering the axial and radial loads of the rotor (108), which has a cantilever arrangement. The bearing housing (111) may further include one or more mechanical seals (117). In an example, the mechanical seals (117) may be connected to the rotating shaft (103) and the rotor vessel (116) for averting any leakage of liquid and gas from inside the rotor vessel (116) to the outside environment.

The rotor (108) further includes one or more metallic plates, hereinafter individually referred to as the base metallic plate (112) and the top metallic plate (113). The metallic plates may be circular in shape. The metallic plates, the sets of concentric rings, and the metallic rings may be stacked together using a plurality of fasteners, such as tie-rods to form rotor. The rotor (108) may be housed inside a rotor vessel (116). Additionally, the disengagement plate (114) helps separate the gas and liquid streams after they pass through the rotating packed bed (101), preventing intermixing of the phases at the outlets.

The outer support rod (125) provides mechanical support to the rotor assembly (106) by securing the packing material and ensuring it remains in place during high-speed rotation. The outer support rod (125) helps prevent deformation or movement of the packing under the centrifugal forces generated by the rotor. The split casing (119) surrounds the rotor assembly (106), packing material, and other internal components, forming a protective barrier between the rotating parts and the external environment. The split casing (119) ensures containment of the gas and liquid phases within the system, preventing leaks. The horizontal split casing (119) allows the casing to be easily opened, simplifying inspection, cleaning, and replacement of internal components such as packing material, rods, or seals. Further, an inner support rod (124) located closer to the center of the rotor supports the inner boundary of the RPB packing material. The inner support rod (124) ensures that the packing remains correctly aligned at the rotor's inner edge. Said rod (124) distributes the mechanical load from the inner portion of the packing, preventing collapse or distortion due to centrifugal forces and providing stability to the packing material near the shaft area, ensuring smooth rotation and preventing vibrations or wobbling.

The liquid distributor assembly (122) is positioned near the liquid inlet (123). The liquid distributor assembly (122) feeds liquid into the RPB packing elements (118), ensuring that the liquid is spread uniformly as it moves outward due to centrifugal forces. By ensuring uniform liquid distribution, the liquid distributor assembly (122) enhances the efficiency of the RPB (101) system, leading to better mass transfer rates and lower energy consumption. The liquid distributor assembly (122) may adapt to various operational scales and applications, such as chemical absorption, distillation, or gas scrubbing.

The gas may be introduced inside the rotor vessel (116) through a gas inlet (120) provided in the rotor vessel (116). In an example, the gas may be forced radially inward to the rotor (108). The gas may be distributed inside the vessel in a homogenous manner by using a gas impingement plate. The gas impingement plate may be made of metal and may have one or more holes on its surface. The gas impingement plate may be provided on the inner surface of the rotor vessel (116) and may be suitably aligned with the gas inlet (120).

The liquid is introduced into the rotor (108) through the liquid distributor assembly (122). The motor (115) rotates the shaft (103), either in a clockwise or anti-clockwise direction, and thereby, in turn, rotates the rotor (108). The gas and the liquid interact with each other over the surface of the packing elements (118), and mass transfer occurs between the two. Due to the centrifugal acceleration produced by the rotation of the rotor (108), the liquid is driven radially outwards of the rotor (108). Further, the gas exits the rotor (108) through the gas outlet (121).

Further, the liquid outlet (126) acts as an exit point for liquid after it has been processed within the rotating packed bed (RPB) (101) system. The liquid enters the RPB (101) through the liquid inlet (123), flows through the packing material inside the rotor assembly (106), and undergoes mass transfer or other processing operations. Once the liquid has been treated, it exits through the liquid outlet (126).

In these embodiments, the detailed features of the roller assembly provide an efficient, low-maintenance solution for supporting rotating machinery, ensuring smooth rotation, balanced load distribution, and protection against environmental factors that may otherwise affect the longevity and performance of the system.

What are described above are merely preferred embodiments of the present disclosure, and are not to limit the present disclosure; any modification, equivalent replacement, and improvement within the principle of the present disclosure should be included in the protection scope of the present disclosure.

References back that are used in dependent claims indicate the further embodiment of the subject matter of the main claim by way of the features of the respective dependent claim; they should not be understood as dispensing with obtaining independent protection of the subject matter for the combinations of features in the referred-back dependent claims. Furthermore, with regard to interpreting the claims, where a feature is concretized in more specific detail in a subordinate claim, it should be assumed that such a restriction is not present in the respective preceding claims.

Since the subject matter of the dependent claims in relation to the prior art on the priority date may form separate and independent disclosures, the applicant reserves the right to make them the subject matter of independent claims or divisional declarations. They may furthermore also contain independent disclosures that have a configuration that is independent of the subject matters of the preceding dependent claims.

Further, elements and/or features of different example embodiments may be combined with each other and/or substituted for each other within the scope of this disclosure and appended claims.

### Advantages of the disclosure

The proposed disclosure provides a Rotating packed bed with improved roller assembly supports to provide support and mitigate vibrations during the operation of rotating packed bed (RPB) and a method thereof.

The proposed disclosure provides a roller assembly to ensure even load distribution on the rotating shaft of rotor assembly through its triangular pitch configuration, leading to low vibrations, smooth operation and longer lifespan of the rotating shaft and the RPB.

The proposed disclosure provides a roller assembly and a method that uses a chemical-resistant material in the outer layer of the rollers prevent corrosion or degradation from chemicals used in the chemical processing unit, thereby enhancing the durability of the assembly.

The proposed disclosure provides a roller assembly with multiple roller pins to secure the rotating shaft ensures better alignment and stability, reduces vibration, and enhances the performance of the rotating packed bed.

The proposed disclosure provides self-lubricating or sealed bearings to reduce the need for frequent maintenance and improve the reliability of the roller assembly during continuous operation.

The proposed disclosure provides a roller assembly for the rotating packed bed (RPB) to provide sturdy support to rotor assembly and thereby causes low vibrations during rotation.

## Claims

1. A roller assembly (100) for rotating packed bed (101) to provide support to a rotor assembly (106), wherein the RPB (101) is embedded in a chemical processing unit (600), the roller assembly (100) comprising:
at least three rollers (102) include a first roller (102-1), a second roller (102-2), and a third roller (102-3) oriented to distribute a load that is disposed in a rotating shaft (103), the first (102-1), the second (102-2), and the third (102-3), rollers being oriented in a pre-determined configuration; and
the rotating shaft (103) being positioned at a center of the first roller (102-1), the second roller (102-2), and the third roller (102-3), such that the rotating shaft (103) comes in contact with the exterior surface (104-1) of the outer layer (104) of the first (102-1), the second (102-2), and the third (102-3) rollers so as to provide support to the RPB (101).

2. The roller assembly (100) as claimed in claim 1, wherein:
the pre-determined configuration is a triangular pitch; and
the roller assembly (100) further comprising one or more bearings (107) operatively connected to each of the roller shaft selected from at least three roller shafts (105-1, 105-2, 105-3) with the at least three rollers (102-1, 102-2, 102-3) to enable rotation, and wherein the one or more bearings (107) are self-lubricating or sealed.

3. The roller assembly (100) as claimed in any of the preceding claims, wherein the roller assembly (100) further comprising an outer layer (104) disposed on an exterior surface (104-1) of the first (102-1), the second (102-2), and the third (102-3) rollers to cover each roller of the at least three rollers (102), and wherein the outer layer (104) is made of a chemical resistance material selected from any or a combination of polytetrafluoroethylene (PTFE), perfluoroelastomer, fluoroelastomer, ethylene propylene diene monomer (EPDM), silicone rubber, ultra-high molecular weight polyethylene (UHMWPE), perfluoroalkoxy alkane (PFA), polyurethane, neoprene (polychloroprene), hastelloy coatings, ethylene tetrafluoroethylene (ETFE), fluorinated ethylene propylene(FEP), or polyether ether ketone (PEEK).

4. The roller assembly (100) as claimed in any of the preceding claims, wherein the RPB (101) further comprises a motor (115) being coupled with the rotating shaft (103) to enable rotation of the rotating shaft (103).

5. The roller assembly (100) as claimed in any of the preceding claims, wherein the chemical processing unit (600) is an integrated unit adapted to perform one or more mass transfer operations, one or more chemical reactions or one or more chemical processes.

6. The roller assembly (100) as claimed in any of the preceding claims, wherein:
the first roller (102-1) configured to provide support to the rotating shaft (103) against an upward thrust exerted due to centrifugal motion of the RPB (101); and
the second roller (102-2) and the third roller (102-3) are configured to fix position of a rotor (108) in the rotor assembly (106) against a downward thrust due to the centrifugal motion of the RPB.

7. A method (200) of implementing a roller assembly (100) to providing support to a rotor assembly (106) of a rotating packed bed (RPB) (101), wherein the RPB (101) is embedded within a chemical processing unit (600), the method (200) comprising:
orienting (201) at least three rollers (102) to distribute a load that is disposed in the rotating shaft (103), the first (102-1), the second (102-2), and the third (102-3) rollers being oriented in a pre-determined configuration, wherein the at least three rollers (102) include a first roller (102-1), the second roller (102-2), and the third roller (102-3); and
positioning (203) the rotating shaft (103) at a center of the first roller (102-1), the second roller (102-2) and the third roller (102-3) such that the rotating shaft (103) comes in contact with the exterior surface (104-1) of the outer layer (104) of each of the first (102-1), the second (102-2), and the third (102-2) rollers so as to provide support to the RPB (101).

8. The method (200) as claimed in claim 7, wherein:
the pre-determined configuration is a triangular pitch;
the RPB (101) further comprises a motor (115) being coupled with the rotating shaft (103) to enable rotation of the rotating shaft (103); and
the chemical processing unit (600) is an integrated unit adapted to perform one or more mass transfer operations, one or more chemical reactions or one or more chemical processes.

9. The method (200) as claimed in any of claims 7 to 8, wherein the method (200) further comprising one or more bearings (107) are operatively connected to each of the roller shaft selected from at least three roller shafts (105-1, 105-2, 105-3) with at least three rollers (102-1, 102-2, 102-3) to enable rotation, and wherein the one or more bearings (107) are self-lubricating or sealed.

10. The method (200) as claimed in any of claims 7 to 9, wherein:
the first roller (102-1) configured to provide support to the rotating shaft (103) against an upward thrust exerted due to centrifugal motion of the RPB (101); and
the second roller (102-2) and the third roller (102-3) are configured to fix position of a rotor (108) in the rotor assembly (106) against a downward thrust due to the centrifugal motion of the RPB.
